# EUROPÄISCHE PATENTSCHRIFT

(11) **EP 2 454 574 B1**
(45) Veröffentlichungstag und Bekanntmachung des Hinweises auf die Patenterteilung: **17.05.2017**
(21) Anmeldenummer: 10724872.6
(22) Anmeldetag: 22.06.2010
(51) Int. Cl.: G01L 9/00

(54) **KAPAZITIVE KERAMISCHE DRUCKMESSZELLE UND DRUCKSENSOR MIT EINER SOLCHEN DRUCKMESSZELLE**
CAPACITIVE CERAMIC LOAD CELL AND PRESSURE SENSOR HAVING SUCH A LOAD CELL
CELLULE DE MESURE DE PRESSION CÉRAMIQUE CAPACITIVE ET CAPTEUR DE PRESSION ÉQUIPÉ D UNE TELLE CELLULE

(30) Priorität: 15.07.2009 DE 102009027742
(43) Veröffentlichungstag der Anmeldung: 23.05.2012
(73) Patentinhaber: Endress + Hauser GmbH + Co. KG, 79689 Maulburg (DE)
(72) Erfinder: DREWES, Ulfert, 79379 Müllheim (DE); ROSSBERG, Andreas, 79713 Bad Säckingen (DE); SCHMIDT, Elke, 79713 Bad Säckingen (DE); UEHLIN, Thomas, 79650 Schopfheim (DE)
(74) Vertreter: Andres, Angelika Maria
(86) Internationale Anmeldenummer: PCT/EP2010/058784
(87) Internationale Veröffentlichungsnummer: WO 2011/006741

(56) Entgegenhaltungen:
- EP-A1- 0 544 934
- EP-A2- 0 373 536
- JP-A- 61 010 736

## Beschreibung

Die vorliegende Betrifft eine kapazitive keramische Druckmesszelle und einen Drucksensor mit einer solchen Druckmesszelle.

Eine grundlegende Form der gattungsgemäßen Druckmesszelle ist beispielsweise in der europäischen Patentanmeldung EP 0351701 oder EP 373 536 offenbart.
Sie weist eine Messmembran und einen Grundkörper auf, wobei die Messmembran mit einer umlaufenden Fügestelle aus einem Aktivhartlot druckdicht verbunden ist, wobei die Kapazität zwischen der ersten und der zweiten Elektrode ein Maß für die Differenz eines von außen auf die Messmembran einwirkenden Druck und eines in der Referenzdruckkammer zwischen dem Grundkörper und der Messmembran herrschenden Drucks ist.
Die Fügestelle kann insbesondere ein Aktivhartlot aufweisen, mit dem eine Langzeit stabile Vakuum feste Verbindung zwischen Grundkörper und Messmembran erzielt wird.
Ein Vorteil der kapazitiven keramischen Druckmesszellen besteht darin, dass sie "trocken" sind, das heißt, in der Referenzdruckkammer steht entweder Umgebungsluft oder Vakuum an, so dass bei einem Bruch der Messmembran, welche direkt mit dem Messmedium beaufschlagt wird, keine Kontamination des Messmediums durch eine Übertragungsflüssigkeit erfolgen kann, die bei Drucksensoren mit Druckmittlern vorhanden ist.
Die kapazitiven keramischen Druckmesszellen sind gewöhnlich in einem Gehäuse eines Drucksensors eingebaut, wobei zwischen den Gehäuse und der Druckmesszelle ein O-Ring axial eingespannt ist. Um Rückwirkungen zwischen der axialen Einspannung auf die Auslenkung der Messmembran zu vermeiden, sollte der O-Ring in dem Bereich auf der Messmembran auflegen, der von der umlaufenden Fügestelle unterstützt ist. Fertigungstoleranzen und Montagetoleranzen die O-Ringe führen daher zu einer Mindestbreite der Fügestelle, welche bei gegebenen äußeren Abmessungen des Grundkörpers bzw. der Druckmesszelle die verfügbare Fläche für die Elektroden verkleinert, was sich unmittelbar negativ auf die Messkapazität zwischen den Elektroden auswirkt.

Bei vergleichsweise großen Messzellen mag dies tolerabel sein, bei kompakteren Bauformen führt aber eine weitere Verkleinerung der Elektrodenfläche zu deutlichen Einschränkungen, die nicht ohne weiteres hinzunehmen sind.

Es ist daher die Aufgabe der vorliegenden Erfindung, eine Druckmesszelle und einen Drucksensor bereitzustellen, welche diese Nachteile des Standes der Technik überwinden.

Die Aufgabe wird erfindungsgemäß gelöst durch die Druckmesszelle gemäß dem unabhängigen Patentanspruch 1 und den Drucksensor gemäß Anspruch 13.

Die erfindungsgemäße kapazitive, keramische Druckmesszelle, umfasst einen keramischen Grundkörper und eine keramische Messmembran, wobei die keramische Messmembran entlang einer umlaufenden Fügestelle druckdicht mit einer Stirnfläche des Grundkörpers unter Bildung einer Referenzdruckkammer zwischen dem Grundkörper und der Messmembran verbunden ist, wobei die Messmembran mindestens eine erste Elektrode aufweist, welche dem Grundkörper zugewandt ist, wobei der Grundkörper mindestens eine zweite Elektrode aufweist, welche der Messmembran zugewandt ist, wobei die Kapazität zwischen der ersten Elektrode und der zweiten Elektrode von der Differenz eines auf die Messmembran von außen einwirkenden Drucks und einem in der Referenzdruckkammer herrschenden Drucks abhängt, wobei die Fügestelle eine Stärke d aufweist, welche einen Gleichgewichtsabstand zwischen der Messmembran und der Stirnseite des Grundkörpers definiert, dadurch gekennzeichnet, dass auf der Stirnseite des Grundkörpers eine Trägerschicht angeordnet ist, die einen anorganischen Isolator aufweist, wobei die Trägerschicht eine Stärke von mindestens 0,2 d aufweist, und wobei die zweite Elektrode und die dritte Elektrode auf der Trägerschicht angeordnet ist. In einer Weiterbildung der Erfindung umfasst die Trägerschicht Glas, wobei das Glas nach einer derzeit bevorzugten Ausgestaltung frei ist von B₂O₃, PbO und ZnO. Die Trägerschicht kann insbesondere als Dickschichtpaste aufgetragen und anschließend gebrannt worden sein.
In einer Weiterbildung der Erfindung weist die Trägerschicht eine Stärke von mindestens 0,2 d, insbesondere mindestens 0,25 d, vorzugsweise mindestens 0,275 d auf.
In einer Weiterbildung der Erfindung weist die Elektrode einen metallischen Werkstoff, insbesondere Tantal auf.
In einer Weiterbildung der Erfindung ist zwischen der zweiten Elektrode und der Trägerschicht ein Haftvermittler, insbesondere Chrom, Nickel-Chrom, oder Titan-Wolfram angeordnet.
In einer Weiterbildung der Erfindung ist zwischen dem keramischen Material des Grundkörpers und der Trägerschicht eine Schirmelektrode angeordnet ist. Die Schirmelektrode kann insbesondere über die Fügestelle im galvanischen Kontakt mit der Messelektrode stehen.
Die Fügestelle weist in einer Ausgestaltung der Erfindung ein Aktivhartlot auf, welches insbesondere ein Zirkon-Nickel-Titan Aktivhartlot umfasst.

In einer Weiterbildung der Erfindung weist das Material der Messmembran eine Aluminiumoxyd-Keramik mit einer Reinheit von mindestens 99,9 % auf.

In einer Weiterbildung der Erfindung berührt die Messmembran bzw. die erste Elektrode im Überlastfall die Trägerschicht bzw. die auf der Trägerschicht angeordnete zweite Elektrode, wobei die maximale Biegespannung in der Messmembran bei dem ersten Kontakt zwischen der Messmembran und der Trägerschicht bzw. der zweiten Elektrode weniger als beispielsweise 90 %, vorzugsweise weniger als 80 % der Biegespruchspannung des Membranmaterials beträgt.

In einer ersten Ausgestaltung der Erfindung weist die Oberfläche der Trägerschicht eine konkave Form auf, welche der Biegelinie der Messmembran angenähert ist, oder welche der Biegelinie der Messmembran entspricht.

In einer zweiten Ausgestaltung der Erfindung weist die Trägerschicht einem im Wesentlichen ebene Oberfläche auf.

Der erfindungsgemäße Drucksensor, umfasst eine erfindungsgemäße Druckmesszelle, ein Gehäuse, welches in seinem Inneren eine Druckmesszellenkammer aufweist, in welcher die Druckmesszelle angeordnet ist; und eine Einspannvorrichtung, wobei das Gehäuse eine Gehäuseöffnung aufweist, durch welche die Messmembran mit einem Medium beaufschlagbar ist, wobei die Gehäuseöffnung eine sich radial einwärts erstreckende, ringförmige Schulter aufweist, welche als Dichtfläche dient, wobei zwischen der Dichtfläche und der Messmembran ein Dichtring axial eingespannt ist, wobei die Druckmesszelle zwischen der Einspannvorrichtung, die auf eine der Messmembran abgewandte rückseitige Stirnfläche des Grundkörpers der Druckmesszelle einwirkt, und dem Dichtring axial eingespannt ist. Der Dichtring sitzt vorzugsweise vollständig auf einem durch die Fügestelle unterstützten Bereich der Messmembran auf.

Die Erfindung wird nun anhand eines in den Zeichnungen dargestellten Ausführungsbeispiels erläutert. Es zeigt:
Fig. 1: Einen Längsschnitt durch eine erfindungsgemäße Druckmesszelle; und
Fig. 2: Einen Längsschnitt durch einen erfindungsgemäßen Drucksensor.

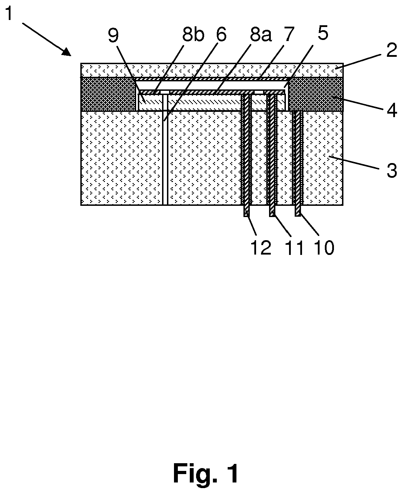

Die in Figur 1 gezeigte Druckmesszelle 1 umfasst eine kreisscheibenförmige Messmembran aus Aluminiumoxyd mit einem Durchmesser von weniger als 20 mm und einer Materialstärke von etwa 100 Mikrometer. Das Material der Messmembran weist eine Reinheit von mehr als 99,9 % bezogen auf die Masse des Materials auf. Die Druckmesszelle umfasst weiterhin einen Grundkörper 3 aus Aluminiumoxyd mit einer Materialstärke von beispielsweise 8 mm, wobei der Grundkörper 3 und die Messmembran 2 mittels eines Aktivhartlots 4 in einem Vakuumprozess gefügt sind, wobei über die Materialstärke der Fügestelle 4 der Abstand zwischen der Messmembran 2 und dem Grundkörper 3 eingestellt ist. Der Abstand kann beispielsweise zwischen 20 und 25 Mikrometern liegen. Wie im folgenden noch zu erläutern sein wird, ist für die Fügestelle 4 eine Mindestbreite erforderlich, woraus sich ein Innendruchmesser der Fügestelle von beispielsweise 10 bis 12 mm ergibt. Zwischen der Messmembran 2 und dem Grundkörper 3 ist durch die druckdichte Verbindung mittels der Fügestelle 4 einer Referenzdruckkammer 5 gebildet, welche bei Absolutdrucksensoren evakuiert ist, und welche im vorliegenden Ausführungsbeispiel über einen Kanal 6 mit Atmosphärendruck beaufschlagbar ist, wobei sich der Kanal 6 von einer der Messmembran 2 abgewandten Rückseite des Grundkörpers 3 durch den Grundkörper in die Referenzdruckkammer 5 erstreckt.

Die dem Grundkörper zugewandte Oberfläche der Messmembran 2 weißt eine metallische Elektrode 7 auf, welche in einer Materialstärke von weniger als 0,5 Mikrometer auf der Messmembran abgeschieden ist, und welche mit der Fügestelle 4 in galvanischem Kontakt steht. Gegenüber der ersten Elektrode 7 ist eine Elektrodenanordnung mit einer zweiten Elektrode 8a und einer dritten Elektrode 8b fest mit dem Grundkörper verbunden, wobei die dritte Elektrode 8b die zweite Elektrode 8a ringförmig umgibt. Die zweite und die dritte Elektrode weisen ebenfalls einen metallischen Werkstoff auf, insbesondere Tantal, der in einer Stärke in weniger als 0,5 mm abgeschieden ist. Die Elektroden werden über metallische Stifte, insbesondere Tantalstifte 10, 11, 12 kontaktiert, welche mittels eines Aktivhartlots in Bohrungen, die sich von der Rückseite des Grundkörpers ins Innere der Druckmesszelle erstrecken, fixiert und abgedichtet sind. Hierbei ist noch zu beachten, dass die Kontaktierung der ersten Elektrode über die Fügestelle 4 erfolgt, welche ein Aktiv-Hart-Lot, insbesondere ein Zirkon-Nickel-Titan Aktiv-Hart-Lot aufweist. Um die Kapazitäten zwischen der ersten Elektrode 7 und der zweiten Elektrode 8a und der dritten Eletrode 8b zu erhöhen, ist auf der messmembranseitigen Oberfläche des Grundkörpers 3 eine Trägerschicht 9 aus Glas in einer Stärke von etwa 7 Mikrometern präpariert. Die zweite Elektrode 8a und die dritte Elektrode 8b sind dann auf dieser Trägerschicht 9 abgeschieden.

Insoweit, als die druckabhängige Verformung der Messmembran 2 in ihrem Zentralbereich stärker ist als in ihrer Peripherie, weist die Kapazität zwischen der zweiten Elektrode 8a und der ersten Elektrode 7 eine größere Druckabhängigkeit auf als die Kapazität zwischen der dritten Elektrode 8b und der ersten Elektrode 7.
Durch Vergleich der Kapazitäten kann die Querempflindlichkeit der erfindungsgemäßen Druckmesszelle gegenüber der Temperatur minimiert werden. Dies insoweit beachtlich als die Materialstärke der Fügestelle naturgemäß eine Temperaturabhängigkeit aufweist, wodurch der Abstand zwischen den Elektroden verändert wird, was wiederum eine Kapazitätsveränderung bewirkt.

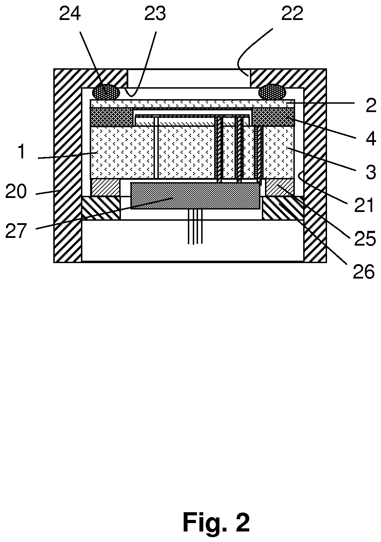

Der in Figur 2 gezeigte Drucksensor umfasst die Druckmesszelle 1 aus Figur 1 in einem Gehäuse 20, wobei die Druckmesszelle 1 in einer Messzellenkammer 21 im Inneren des Gehäuses angeordnet ist. Das Gehäuse 20 weist eine Öffnung 22 zur Messzellenkammer 21 auf, wobei die Öffnung 22 durch eine sich radial erstreckende Schulter begrenzt ist, welche als Dichtfläche 23 dient. Zwischen der Dichtfläche 23 und der Messmembran 2 ist ein Dichtring 24 axial eingespannt, wobei die Druckmesszelle 1 mittels eines Einschraubrings 26 der in ein hier nicht gezeigtes Gewinde in der Wand des Gehäuses 20 eingreift, gegen den Dichtring 24 axial gespannt ist. Zwischen dem Gewindering 26 und der Rückseite der Druckmesszelle ist ein Entkopplungsring 25 vorgesehen, welcher ebenfalls einen keramischen Werkstoff, insbesondere Aluminiumoxyd aufweist. Die Messelektroden sind über die oben beschriebenen Durchführungen an eine Auswertungsschaltung 27 angeschlossen, in welcher eine Verarbeitung der Kapazitätsignale erfolgt, wobei die Schaltung entweder direkt einen Druckmesswert an ein Leitsystem ausgeben oder die verarbeiteten Signale zur weiteren Auswertung an eine hier nicht dargestellte Hauptelektronik eines Messumformers weiterleiten kann.

## Patentansprüche

1. Kapazitive, keramische Druckmesszelle (1), umfassend:
einen keramischen Grundkörper (3) und eine keramische Messmembran (2),
wobei die keramische Messmembran (2) entlang einer umlaufenden Fügestelle (4) druckdicht mit einer Stirnfläche des Grundkörpers (3) unter Bildung einer Referenzdruckkammer (5) zwischen dem Grundkörper (3) und der Messmembran (2) verbunden ist,
wobei die Messmembran (2) mindestens eine erste Elektrode (7) aufweist, welche dem Grundkörper (3) zugewandt ist,
wobei der Grundkörper (3) mindestens eine zweite Elektrode (8a) und eine dritte Elektrode (8b) aufweist, welche der Messmembran (2) zugewandt sind,
wobei die dritte Elektrode (8b) die zweite Elektrode (8a) ringförmig umgibt,
wobei die Kapazität zwischen der ersten Elektrode (7) und der zweiten Elektrode (8a) von der Differenz eines auf die Messmembran (2) von außen einwirkenden Drucks und einem in der Referenzdruckkammer (5) herrschenden Drucks abhängt,
wobei die Fügestelle (4) eine Stärke d aufweist, welche einen Gleichgewichtsabstand zwischen der Messmembran (2) und der Stirnseite des Grundkörpers (3) definiert,
**dadurch gekennzeichnet, dass**
auf der Stirnseite des Grundkörpers (3) eine Trägerschicht (9) angeordnet ist, die einen anorganischen Isolator aufweist, wobei die Trägerschicht (9) eine Stärke von mindestens 0,2 d aufweist, und wobei die zweite Elektrode (8a) und die dritte Elektrode (8b) auf der Trägerschicht (9) abgeschieden sind.

2. Druckmesszelle nach Anspruch 1, wobei die Trägerschicht Glas umfasst.

3. Druckmesszelle nach Anspruch 1 oder 2, wobei die Trägerschicht eine Stärke von mindestens 0,2 d, insbesondere mindestens 0,25 d, vorzugsweise mindestens 0,275 d aufweist.

4. Druckmesszelle nach einem der Ansprüche 1 - 3, wobei die Elektrode einen metallischen Werkstoff, insbesondere Tantal aufweist.

5. Druckmesszelle nach einem der Ansprüche 1 - 4, wobei der zwischen der zweiten Elektrode und der Trägerschicht ein Haftvermittler, insbesondere Chrom, Nickel-Chrom, oder Titan-Wolfram angeordnet ist.

6. Druckmesszelle nach einem der Ansprüche 1 - 5, wobei zwischen dem keramischen Material des Grundkörpers und der Trägerschicht eine Schirmelektrode angeordnet ist.

7. Druckmesszelle nach einem der vorhergehenden Ansprüche, wobei die Messmembran eine Aluminiumoxyd-Keramik mit einer Reinheit von mindestens 99,9 % aufweist.

8. Druckmesszelle nach einem der vorhergehenden Ansprüche, wobei die Messmembran bzw. die erste Elektrode im Überlastfall die Trägerschicht bzw. die auf der Trägerschicht angeordnete zweite Elektrode berührt.

9. Druckmesszelle nach Anspruch 8, wobei die maximale Biegespannung in der Messmembran bei dem ersten Kontakt zwischen der Messmembran und der Trägerschicht bzw. der zweiten Elektrode weniger als 90 %, vorzugsweise weniger als 80 % der Biegespruchspannung des Membranmaterials beträgt.

10. Druckmesszelle nach einem der vorhergehenden Ansprüche, wobei die Oberfläche der Trägerschicht eine konkave Form aufweist, welche der Biegelinie der Messmembran angenähert ist, oder welche der Biegelinie der Messmembran entspricht.

11. Druckmesszelle nach einem der Ansprüche 1 bis 9, wobei die Trägerschicht einem im Wesentlichen ebene Oberfläche aufweist.

12. Druckmesszelle nach einem der vorhergehenden Ansprüche, wobei die Fügestelle ein Aktivhartlot aufweist, welches insbesondere ein Zirkon-Nickel-Titan Aktivhartlot umfasst.

13. Drucksensor, umfassend:
eine Druckmesszelle nach einem der vorhergehenden Ansprüche;
ein Gehäuse, welches in seinem Inneren eine Druckmesszellenkammer aufweist, in welcher die Druckmesszelle angeordnet ist; und
eine Einspannvorrichtung,
wobei das Gehäuse eine Gehäuseöffnung aufweist, durch welche die Messmembran mit einem Medium beaufschlagbar ist,
wobei die Gehäuseöffnung eine sich radial einwärts erstreckende, ringförmige Schulter aufweist, welche als Dichtfläche dient,
wobei zwischen der Dichtfläche und der Messmembran ein Dichtring axial eingespannt ist,
wobei die Druckmesszelle zwischen der Einspannvorrichtung, die auf eine der Messmembran abgewandte rückseitige Stirnfläche des Grundkörpers der Druckmesszelle einwirkt, und dem Dichtring axial eingespannt ist.

14. Drucksensor, nach Anspruch 13, wobei der Dichtring vollständig auf einem durch die Fügestelle unterstützten Bereich der Messmembran aufsitzt.

## Claims

1. Capacitance ceramic pressure measuring cell (1), comprising:
a ceramic meter body (3) and a ceramic measuring diaphragm (2),
wherein the ceramic measuring diaphragm (2) is connected in a pressure-tight manner to the front face of the meter body (3) along a circumferential joint (4), forming a reference pressure chamber (5) between the meter body (3) and the measuring diaphragm (2),
wherein the measuring diaphragm (2) has at least a first electrode (7), which faces towards the meter body (3),
wherein the meter body (3) has at least a second electrode (8a) and a third electrode (8b), which face towards the measuring diaphragm (2), wherein the third electrode (8b) surrounds the second electrode (8a) in an annular manner,
wherein the capacitance between the first electrode (7) and the second electrode (8a) depends on the difference between a pressure acting externally on the measuring diaphragm (2) and a pressure present in the reference pressure chamber (5), wherein the joint (4) has a thickness d that defines a distance of equilibrium between the measuring diaphragm (2) and the front face of the meter body (3),
**characterized in that**
a support layer (9) with an inorganic isolator is arranged on the front face of the meter body (3), wherein the support layer (9) has a thickness of at least 0.2 d, and wherein the second electrode (8a) and the third electrode (8b) are deposited on the support layer (9).

2. Pressure measuring cell as claimed in Claim 1, wherein the support layer comprises glass.

3. Pressure measuring cell as claimed in Claim 1 or 2, wherein the support layer has a thickness of at least 0.2 d, particularly at least 0.25 d, preferably at least 0.275 d.

4. Pressure measuring cell as claimed in one of the Claims 1 to 3, wherein the electrode features a metal material, particularly tantalum.

5. Pressure measuring cell as claimed in one of the Claims 1 to 4, wherein a bonding agent, particularly chromium, nickel-chromium or titanium-tungsten, is arranged between the second electrode and the support layer.

6. Pressure measuring cell as claimed in one of the Claims 1 to 5, wherein a guard electrode is arranged between the ceramic material of the meter body and the support layer.

7. Pressure measuring cell as claimed in one of the previous claims, wherein the measuring diaphragm features an aluminum-oxide ceramic with a purity of at least 99.9%.

8. Pressure measuring cell as claimed in one of the previous claims, wherein, in the event of overload, the measuring diaphragm or the first electrode comes into contact with the support layer or the second electrode arranged on the support layer.

9. Pressure measuring cell as claimed in Claim 8, wherein the maximum bending stress in the measuring diaphragm the first time contact is made between the measuring diaphragm and the support layer or the second electrode is less than 90%, preferably less than 80% of the bending breaking stress of the diaphragm material.

10. Pressure measuring cell as claimed in one of the previous claims, wherein the surface of the support layer has a concave shape which is close to the bending line of the measuring diaphragm or which corresponds to the bending line of the measuring diaphragm.

11. Pressure measuring cell as claimed in one of the Claims 1 to 9, wherein the support layer has an essentially planar surface.

12. Pressure measuring cell as claimed in one of the previous claims, wherein the joint has an active brazing solder which comprises, in particular, a zirconiumnickel-titanium active brazing solder.

13. Pressure sensor, comprising:
a pressure measuring cell as claimed in one of the previous claims;
a housing which has a pressure measuring cell chamber in its interior in which the pressure measuring cell is arranged; and
a clamping unit,
wherein the housing has a housing opening via which the measuring diaphragm can be exposed to a medium,
wherein the housing opening has an annular shoulder that extends radially inwards and serves as a sealing surface,
wherein a sealing ring is axially clamped between the sealing surface and the measuring diaphragm,
wherein the pressure measuring cell is axially clamped between the clamping unit, which acts on a face located at the back of the meter body of the pressure measuring cell, said face facing away from the measuring diaphragm, and the sealing ring.

14. Pressure sensor as claimed in Claim 13, wherein the sealing ring is fully seated on an area of the measuring diaphragm that is supported by the joint.

## Revendications

1. Cellule de mesure de pression céramique capacitive (1), comprenant :
un corps de base céramique (3) et une membrane de mesure céramique (2),
la membrane de mesure céramique (2) étant reliée de façon étanche à la pression le long d'un joint (4) périphérique avec une surface frontale du corps de base (3), en formant une chambre de pression de référence (5) entre le corps de base (3) et la membrane de mesure (2),
cellule pour laquelle la membrane de mesure (2) comporte au moins une première électrode (7), laquelle fait face au corps de base (3),
cellule pour laquelle la membrane de mesure (2) comporte au moins une deuxième électrode (8a) et une troisième électrode (8b), lesquelles font face à la membrane de mesure (2), la troisième électrode (8b) entourant de façon annulaire la deuxième électrode (8a),
cellule pour laquelle la capacité entre la première électrode (7) et la deuxième électrode (8a) dépend de la différence entre une pression agissant à l'extérieur sur la membrane de mesure (2) et une pression régnant dans la chambre de pression de référence (5), le joint (4) présentant une épaisseur d, laquelle définit une distance d'équilibre entre la membrane de mesure (2) et la surface frontale du corps de base (3),
**caractérisée**
**en ce qu'**est disposée sur la surface frontale du corps de base (3) une couche de support (9) comportant un isolateur inorganique, la couche de support présentant une épaisseur d'au moins 0,2 d, et la deuxième électrode (8a) et la troisième électrode (8b) étant déposées sur la couche de support (9).

2. Cellule de mesure de pression selon la revendication 1, pour laquelle la couche de support comprend du verre.

3. Cellule de mesure de pression selon la revendication 1 ou 2, pour laquelle la couche de support présente une épaisseur d'au moins 0,2 d, notamment d'au moins 0,25 d, de préférence d'au moins 0,275 d.

4. Cellule de mesure de pression selon l'une des revendications 1 à 3, pour laquelle l'électrode présente un matériau métallique, notamment du tantale.

5. Cellule de mesure de pression selon l'une des revendications 1 à 4, pour laquelle est disposé entre la deuxième électrode et la couche de support un agent adhésif, notamment en chrome, nickel-chrome ou titane-tungstène.

6. Cellule de mesure de pression selon l'une des revendications 1 à 5, pour laquelle une électrode écran est disposée entre le matériau céramique du corps de base et la couche de support.

7. Cellule de mesure de pression selon l'une des revendications précédentes, pour laquelle la membrane de mesure présente une céramique d'oxyde d'aluminium d'une pureté d'au moins 99,9 %.

8. Cellule de mesure de pression selon l'une des revendications précédentes, pour laquelle la membrane de mesure ou la première électrode entre en contact, en cas de surcharge, avec la couche de support ou la deuxième électrode disposée sur la couche de support.

9. Cellule de mesure de pression selon la revendication 8, pour laquelle la tension de flexion maximale au sein de la membrane de mesure lors du premier contact entre la membrane de mesure et la couche de support, ou la deuxième électrode, est inférieure à 90 %, de préférence inférieure à 80 % de la tension de flexion à la rupture du matériau de la membrane.

10. Cellule de mesure de pression selon l'une des revendications précédentes, pour laquelle la surface de la couche de support présente une forme concave proche de la ligne de flexion de la membrane de mesure, ou qui correspond à la ligne de flexion de la membrane de mesure.

11. Cellule de mesure de pression selon l'une des revendications 1 à 9, pour laquelle la couche de support présente une surface pour l'essentiel plane.

12. Cellule de mesure de pression selon l'une des revendications précédentes, pour laquelle le joint présente un métal d'apport de brasage fort, notamment constitué de zirconium, de nickel et de titane.

13. Capteur de pression, comprenant :
une cellule de mesure de pression selon l'une des revendications précédentes ;
un boîtier, qui présente dans son intérieur une chambre de cellule de mesure de pression, dans laquelle est disposée la cellule de mesure de pression ; et
un dispositif de serrage,
le boîtier présentant une ouverture à travers laquelle la membrane de mesure peut être alimentée avec un produit,
l'ouverture de boîtier présentant un épaulement annulaire, s'étendant radialement vers l'intérieur, lequel épaulement sert de surface d'étanchéité,
une bague d'étanchéité étant serrée axialement entre la surface d'étanchéité et la membrane de mesure,
la cellule de mesure de pression étant serrée axialement entre le dispositif de serrage, qui agit sur une surface frontale située à l'arrière du corps de base de la cellule de mesure de pression, laquelle surface est à l'opposé de la membrane de mesure, et la bague d'étanchéité.

14. Capteur de pression selon la revendication 13, pour lequel la bague d'étanchéité repose entièrement sur une zone de la membrane de mesure, supportée par le joint.
